# EUROPÄISCHE PATENTSCHRIFT

(11) **EP 1 594 063 B1**
(45) Veröffentlichungstag und Bekanntmachung des Hinweises auf die Patenterteilung: **30.03.2011**
(21) Anmeldenummer: 04010701.3
(22) Anmeldetag: 05.05.2004
(51) Int. Cl.: G06F 11/36

(54) **Verfahren zum Überprüfen von Steuerungsprogrammen**
Method for monitoring control programs
Procédé de surveillance de programmes de contrôle

(43) Veröffentlichungstag der Anmeldung: 09.11.2005
(73) Patentinhaber: SIEMENS AKTIENGESELLSCHAFT, 80333 München (DE)
(72) Erfinder: Becker, Peter, 76571 Gaggenau (DE)

(56) Entgegenhaltungen:
- EP-A- 0 476 635
- US-B1- 6 266 706

## Beschreibung

Die Erfindung betrifft ein Verfahren zum Untersuchen und Überprüfen (Debuggen) von Softwareprogrammen, speziell von Steuerungsprogrammen, wie sie zur Steuerung und/oder Überwachung von technischen Prozessen verwendet werden.

Software zum Überprüfen von anderer Software ist als so genannte Debug-Software (Debugger) allgemein bekannt. Mit solcher Debug-Software kann die überprüfte Software sukzessive, d. h. in einzelnen Schritten, ausgeführt werden und die sich dabei ergebenden Auswirkungen, z. B. Auswirkungen auf Speicherinhalte, beobachtet werden. Um Speicherinhalte, z. B. den Inhalt bestimmter in der überwachten Software verwendeter Variablen, zu überwachen, ist es üblich, diese Speicherinhalte immer dann zu überwachen, wenn gemäß der überwachten Software Änderungen der Speicherinhalte vorkommen können, wenn also ein Zugriff auf die jeweilige Variable erfolgt. Damit bis zu den ggf. nur vereinzelt vorkommenden Positionen in der überwachten Software, an der ein Zugriff auf diese Variable vorgesehen ist, nicht das restliche Programm in Einzelschritten ausgeführt werden muss, ist es üblich, an den relevanten Positionen so genannte Breakpoints zu setzen. Ein Breakpoint hat in an sich bekannter Weise den Effekt, dass die überprüfte Software bis zu der jeweils durch den Breakpoint definierten Position ausgeführt wird und dann die Kontrolle an die Debug-Software übergeben wird, mit deren Hilfe der Wert der Variablen vor und nach der Ausführung der betreffenden Programmanweisung untersucht werden kann. Eine solche Überwachung ist jedoch nicht ausreichend, wenn es darum geht, Änderungen im Speicher zu erkennen, die sich nicht aufgrund direkter Zuweisungen an Variable ergeben. Zu diesem Zweck ist das Konzept der Breakpoints erweitert worden. Gemäß einer solchen Erweiterung ist vorgesehen, die Abbruchstelle nicht im Programm-, sondern im Datenbereich vorzusehen. D. h., es wird eine vorgegebene Position im Datenbereich auf Veränderungen überwacht. Die Kombination der für eine solche Überwachung erforderlichen Parameter wird als Watchpoint bezeichnet. Das gesamte Konzept ist ebenfalls unter diesem Schlagwort bekannt.

Für verschiedene Situationen ist aber auch das Konzept der Watchpoints immer noch nicht optimal.

In Softwareprogrammen wird nämlich oftmals eine Datenstruktur bearbeitet, deren physikalischer Speicherort sich ständig ändert oder im Vorhinein nicht bekannt ist. Als Beispiel sei die Bearbeitung von Telegrammen genannt, mit deren Hilfe in an sich bekannter Weise ein strukturierter Datenaustausch zwischen zwei Rechnern oder zwei Prozessen auf einem Rechner bewältigt wird. Beim Testen solcher Telegramme mit bisher zur Verfügung stehender Debug-Software ist oft die Notwendigkeit gegeben, z. B. das Programm zu stoppen, wenn an einer bestimmten Stelle im Telegramm ein bestimmter Wert geschrieben oder gelesen wird. Auf diese Weise soll nämlich unter vielen Telegrammen eine Selektion vorgenommen werden. Werden die gesendeten oder empfangenen Telegramme immer ab einer bestimmten Startadresse im Speicherbereich abgelegt, kann mittels bekannter Debug-Software dieses Problem mit einem Trigger, der in anderem Zusammenhang auch als Watchpoint bezeichnet wird, gelöst werden. Hierzu wird in der Debug-Software, unter Angabe einer festen Adresse, die Triggerbedingung (z. B. Programm stoppen, wenn ein bestimmtes Datum geschrieben wird) definiert. In der Debug-Software oder - wie heute vermehrt üblich - im Prozessor wird die vorgegebene Adresse überwacht und löst beim Lesen oder Schreiben dieser Adresse z. B. einen Interrupt aus, der die Debug-Software startet.

Üblicherweise werden Telegramme aber in frei allokierten Speicherbereichen, also im Vorhinein nicht bekannten Speicherbereichen, abgelegt und im verarbeitenden Programm über einen Pointer verwaltet. Da die im Pointer referenzierte Startadresse des jeweiligen Telegramms sich ständig ändern kann, lässt sich mit den beschriebenen Mitteln eines Watchpoints die Aufgabe der Überwachung von ein- oder ausgehenden Telegrammen auf ein Datum mit einem bestimmten, vorgegebenen Wert an einer bestimmten, vorgegebenen Position im Telegramm nicht unmittelbar lösen.

Zur Behandlung oder Umgehung dieses Problems ist folgendes Vorgehen üblich: Wie oben beschrieben, werden z. B. Telegramme im frei allokierten Speicher abgelegt und dort durch einen Pointer (T-PTR(Tx)) adressiert, wobei T-PTR ein frei wählbarer Name ist und für "Telegram-Pointer" steht und Tx sich auf das Telegramm mit der Ordnungsnummer x bezieht, also das "x-te" Telegramm. Die Startadresse des jeweiligen Telegramms, also der Wert des Pointers T-PTR(Tx), ändert sich mit der Zeit, z. B. immer dann, wenn ein neues Telegramm empfangen oder versendet wurde. Um eine bestimmte Stelle im jeweiligen Telegramm, z. B. mit dem Offset k, zu überwachen, wird das jeweils überwachte Telegramm in einen feststehenden (also adressmäßig bekannten und unveränderlichen) Speicherbereich kopiert. Dort kann mit einem Watchpoint die jeweils interessierende Telegrammstelle überwacht werden, indem die Telegrammstelle als feste Triggeradresse (z. B. feste Adresse y als Startpunkt des feststehenden Speicherbereichs + Offset k) überwacht wird.

Hierzu muss jedoch das Programm an der zu testenden Stelle geändert werden. Es muss nämlich eine Ergänzung des überwachten Programms dahin gehend vorgenommen werden, dass das jeweils zu überwachende Telegramm, also insbesondere neu eintreffende oder neu zu versendende Telegramme, in den hinsichtlich seiner Adresse feststehenden Speicherbereich kopiert wird.

Nach diesem Ansatz ist also eine Veränderung des zu überprüfenden Programms erforderlich, um die Überprüfung mit vernünftigem Aufwand überhaupt möglich zu machen. Solche Veränderungen sind ungünstig, weil mit einer derartigen Überprüfung nicht sichergestellt werden kann, dass das modifizierte Programm fehlerfrei arbeitet. Ob auch das später um die zur Überprüfung notwendigen Veränderungen bereinigte Programm in gleicher Weise fehlerfrei arbeitet, ist damit nicht sichergestellt, weil gelegentlich in Softwareprogrammen z. B. so genannte Seiteneffekte, wie dynamische Laufzeitänderungen, auftreten, d. h. unerwünschte oder unerklärliche Effekte, die sich nur dann ergeben, wenn die jeweils ursächliche Programmanweisung an einer bestimmten Speicherstelle steht. Die bekannte Möglichkeit zur Behandlung des Problems kann also kaum als Lösung des Problems bezeichnet werden.

EP 0 476 635 A2 beschreibt ein Computersystem mit einem Precompiler, einem Compiler und einem Debugger, wobei ein Zugriff auf Daten in einem frei allokierten Speicherbereich mit Hilfe eines Zeigers und eines Offsets vorgesehen ist.

Der Erfindung liegt daher die Aufgabe zugrunde, diesem Nachteil abzuhelfen und ein Verfahren anzugeben, mit dem eine solche Überwachung, also die Überwachung insbesondere von ein- oder ausgehenden Telegrammen im Hinblick auf ein darin enthaltenes Datum mit einem bestimmten, vorgegebenen oder vorgebbaren Wert an einer bestimmten, vorgegebenen oder vorgebbaren Position im Telegramm, möglich wird. Darüber hinaus ist eine Vorrichtung zu schaffen, welche zur Durchführung des Verfahrens geeignet ist.

Im Hinblick auf das Verfahren wird diese Aufgabe durch die im kennzeichnenden Teil des Anspruchs 1 angegebenen, im Hinblick auf die Vorrichtung durch die im kennzeichnenden Teil des Anspruchs 2 angegebenen Maßnahmen gelöst.

Die Erfindung geht dabei von der Erkenntnis aus, dass sich aufgrund so genannter dynamischer, also zur Laufzeit des Steuerungsprogramms erfolgender Belegung (Allokation) von Speicherbereichen die Situation ergibt, dass die Startadressen solcher Speicherbereiche im Vorhinein nicht bekannt sind. Im Steuerungsprogramm erfolgt der Zugriff auf solche Speicherbereiche durch eine so genannte indirekte Adressierung. Dazu werden an sich bekannte Programmcodemittel, so genannte Zeiger (engl. Pointer), verwendet, die auf die Startadressen dieser Speicherbereiche "zeigen". Ein Pointer ist dabei eine "normale" Variable innerhalb des Steuerungsprogramms, dessen Wert die Adresse angibt, auf die der Pointer zeigt. Der "Wert" eines Pointers ist dabei der Inhalt der Speicherstelle, die durch den Pointer belegt wird.

Ein Zugriff auf derartig referenzierte Speicherbereiche ist für den Bediener einer Debug-Software äußerst schwierig, weil er die durch den Pointer vorgegebene Referenzierung manuell auflösen muss. Ein Watchpoint umfasst aber eine automatische Überwachung einer bestimmten Variablen oder einer bestimmten Speicherstelle. Ohne dass die Adresse der Variablen oder die Adresse der Speicherstelle bekannt ist, ist damit deren automatische Überwachung durch den Watchpoint nicht möglich. Die Erfindung schlägt nun ein Verfahren sowie eine korrespondierende Vorrichtung, Letzteres im Wesentlichen in Form einer Realisierung der Verfahrensschritte in Form von in Software oder Hardware realisierter Logik, vor, welche bestimmt und geeignet ist, die Referenzierung aufzulösen, so dass eine absolute Adresse in Bezug auf den Speicher des jeweiligen Gerätes, auf dem das zu überwachende Steuerungsprogramm abläuft, zur Verfügung steht, die in an sich bekannter Weise zur Verwendung bei einem Watchpoint geeignet ist.

Der Vorteil der Erfindung besteht damit darin, dass auch Abläufe in einem Steuerungsprogramm, die bisher aufgrund indirekter Adressierung kaum automatisch überwachbar waren, in gleicher Form überwachbar werden, wie dies bisher schon für alle direkt referenzierten Vorgänge galt.

Das zu überwachende Datum ist durch seine relative Position im Telegramm (Offset) spezifiziert. Der abgeleitete Watchpoint zur Überwachung des Datums ergibt sich dann durch Addition der durch den Inhalt des Telegrammpointers referenzierten Adresse und des Offsets. Auf diese Weise ergibt sich eine absolute Adresse, die sich auf den Adressraum des jeweiligen Gerätes bezieht, die also bei einem Zugriff auf dessen Speicher eindeutig verwendbar ist.

Das zu überwachende Datum selbst wird also "nur" mittels des abgeleiteten Watchpoints überwacht. Der abgeleitete Watchpoint ist ein "herkömmlicher" Watchpoint, wie er im Stand der Technik bekannt ist. Gemäß der Erfindung kommen also gewissermaßen zwei Watchpoints zum Einsatz: Ein erster, dem abgeleiteten Watchpoint in seiner Auswertung vorangehender Watchpoint, der zur Unterscheidung als Adresswatchpoint bezeichnet wird. Mit diesem Adresswatchpoint erfolgt eine Überwachung des Telegrammpointers oder jedes sonstigen Zeigers innerhalb des Steuerungsprogramms, der den interessierenden Speicherbereich referenziert. Wenn ein insbesondere schreibender Zugriff auf den Telegrammpointer erfolgt, wird ein zweiter Watchpoint anhand des (neuen) Wertes des Telegrammpointers abgeleitet. Dieser abgeleitete Watchpoint wird zur Unterscheidung als Zielwatchpoint bezeichnet. Der Zielwatchpoint wird also durch den Adresswatchpoint aktiviert. Bei einer mehrfach indirekten Adressierung ist entsprechend anstelle des einen Adresswatchpoints eine Kette von Adresswatchpoints vorzusehen.

Die Umsetzung des Verfahrens ist in Software und in Hardware möglich. Eine Soft- oder Hardware-Umsetzung umfasst jeweils die Mittel zur Aus- oder Durchführung der einzelnen Schritte des Verfahrens, d. h. Mittel zur Überwachung von Speicherinhalten, Mittel zum Lesen und Schreiben von Speicherinhalten und dergleichen. Diese Mittel, also Logikmittel für die Hardwarerealisierung oder Programmcodemittel für die Softwarerealisierung, sind je für sich genommen allgemein bekannt.

Der Vorteil der Erfindung und ihrer Ausgestaltungen besteht insbesondere darin, dass mit der beschriebenen Vorgehensweise ein Datum einer Datenstruktur, die an einer nicht vorhersehbaren Position im Speicherbereich abgelegt und dort über eine indirekte Adressierung mittels eines Pointers oder dergleichen referenziert wird, mit Triggerbedingungen einfach überwacht werden kann. Dies kann, wenn das Verfahren in einem Prozessor mit integrierten Schaltungen realisiert ist, ohne nennenswerte Rückwirkungen auf die Dynamik der Programmverarbeitung erfolgen. Ferner sind keine programmverändernden Maßnahmen notwendig, um ein solches Datum zu überwachen.

Die Erfindung ist zum Einsatz beim Design von Prozessoren sowie in fast jeder Debug-Software geeignet. Aus Anwendersicht unterstützt die Erfindung auch einen Programmierer so genannter speicherprogrammierbarer Steuerungen (SPS), bei denen ein Telegrammverkehr besonders häufig stattfindet, weil nämlich sämtliche Zustandsdaten vom oder für den jeweils überwachten technischen Prozess in Form von Telegrammen an die einzelnen Spezialmodule einer solchen SPS, wie z. B. eine Digitaleingabebaugruppe, eine Digitalausgabebaugruppe oder dergleichen, übermittelt werden. Eine häufige Situation beim Austesten von Steuerungsprogrammen für solche Steuerungen besteht entsprechend darin, zu überwachen, wann ein bestimmtes Statussignal aus dem Prozess ansteht. Dies ist mit der Erfindung erstmals ohne großen Aufwand möglich.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

### Darin zeigen:

- FIG 1: einen Inhalt eines Speichers mit Telegrammen und einer zur Überwachung vorgesehenen Kopie eines einzelnen Telegramms sowie dessen Überwachung mittels eines Watchpoints und
- FIG 2: einen Inhalt eines Speichers mit Telegrammen, deren direkte Überwachung durch einen Watchpoint aufgrund der Auflösung der indirekten Referenzierung der jeweiligen Startadressen entsprechend der Erfindung möglich wird.

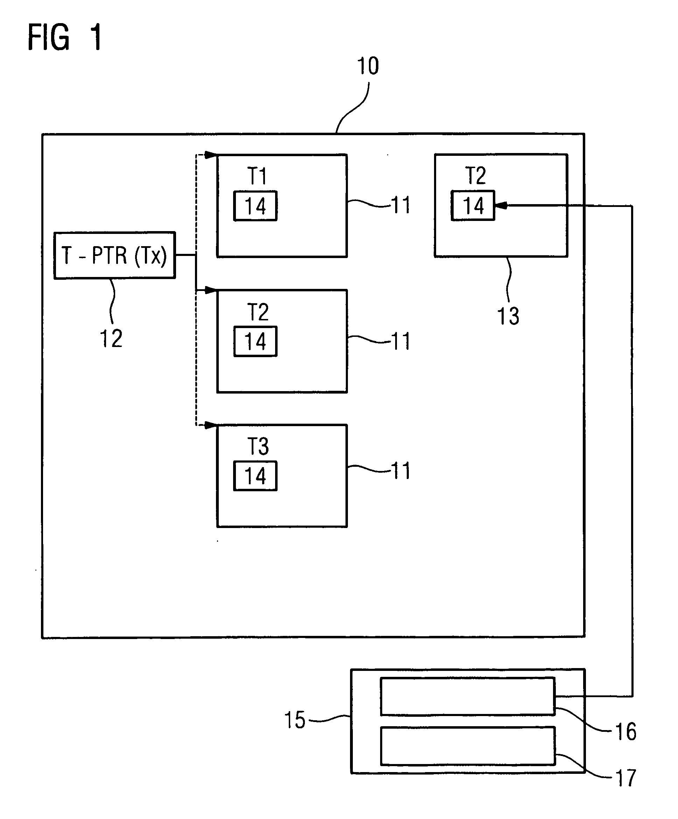

FIG 1 zeigt in einer schematisch vereinfachten Darstellung den Inhalt eines Speichers 10 eines nicht näher dargestellten Automatisierungsgerätes, z. B. einer Zentraleinheit einer speicherprogrammierbaren Steuerung (SPS). Im Speicher 10 befinden sich eine Anzahl von jeweils mit T1, T2, T3 bezeichneten Telegrammen 11. Der Zugriff auf die einzelnen Telegramme 11 erfolgt mittels indirekter Adressierung über einen so genannten Pointer. Entsprechend ist im Speicher 10 ein Telegrammpointer 12 vorgesehen, der im Programm z. B. die Bezeichnung "T-PTR(Tx)" trägt. Der Inhalt des Telegrammpointers 12 entscheidet darüber, welches der Telegramme 11, also entweder das Telegramm T1, das Telegramm T2 oder das Telegramm T3, der Telegrammpointer 12 jeweils referenziert. Zum Referenzieren des Telegramms T2 11 erhält der Telegrammpointer 12 den Wert der Startadresse des Telegramms T2 11 im Speicher 10. Dies ist durch den durchgezogenen Pfeil vom Telegrammpointer 12 zum Telegramm T2 11 dargestellt. Die Möglichkeit, dass der Telegrammpointer 12 auch die übrigen Telegramme T1, und T3 11 referenzieren kann, ist durch die gestrichelte Linie ausgehend vom Telegrammpointer 12 dargestellt.

Zum Überwachen jeweils eines Telegramms 11 ist bisher zur Umgehung der Probleme, die mit der vorliegenden Erfindung gelöst werden, vorgesehen, dass das jeweils zu überwachende Telegramm 11 von seiner variablen, nicht vorhersehbaren Adresse im Speicher 10 an eine unveränderliche Adresse kopiert wird. Vom jeweils zu überwachenden Telegramm 11 wird also eine Telegrammkopie 13 erstellt.

Dargestellt ist in FIG 1 die Situation, dass das Telegramm T2 11 kopiert worden ist, so dass die Telegrammkopie 13 die gleichen Daten umfasst, wie das eigentlich zu überwachende Telegramm T2 11. Die Überwachung des zu überwachenden Telegramms T2 11 bezieht sich nun nicht auf das komplette Telegramm 11, sondern auf ein bestimmtes Datum innerhalb des Telegramms, das zu überwachende Datum 14. Dadurch, dass die Telegrammkopie 13 sämtliche Daten des zu überwachenden Telegramms T2 11 umfasst, umfasst es auch das zu überwachende Datum 14.

Die Telegrammkopie 13, genauer das zu überwachende Datum 14 innerhalb der Telegrammkopie 13, kann nun mit den üblichen Mitteln so genannter Watchpoints überwacht werden. Dazu sind in FIG 1 separat die Parameter eines solchen Watchpoints als Watchpointparameter 15 dargestellt. Die Watchpointparameter 15 umfassen einen Adressparameter 16 und einen Bedingungsparameter 17. Der Adressparameter 16 referenziert, wie durch den Pfeil zum zu überwachenden Datum 14 innerhalb der Telegrammkopie 13 dargestellt, genau das zu überwachende Datum 14 innerhalb der Telegrammkopie 13. Der Bedingungsparameter 17 spezifiziert eine Bedingung, bei deren Erfüllung der Watchpoint aktiv werden soll. Eine solche Bedingung kann z. B. sein, dass der Watchpoint nur dann aktiv wird, wenn eine Änderung in der mit dem Adressparameter 16 referenzierten Speicherstelle stattfindet. Es sind auch komplexere Bedingungen denkbar, z. B. derart, dass der Watchpoint nur dann aktiv wird, wenn das zu überwachende Datum einen vorgegebenen Wert, z. B. "100", überschreitet.

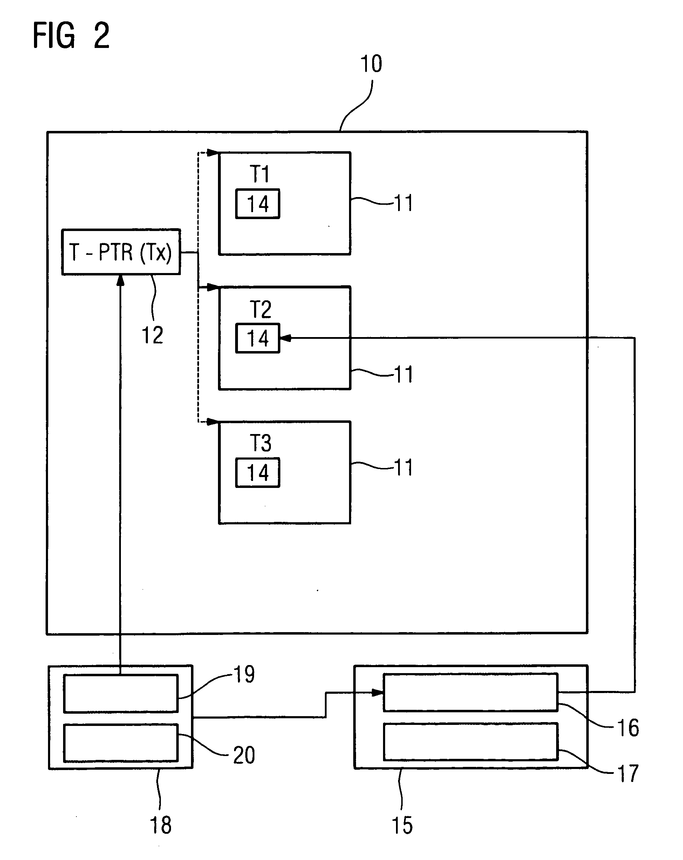

FIG 2 zeigt eine Darstellung der Situation entsprechend FIG 1 bei Anwendung der Erfindung.

Dabei wird das oben beschriebene Problem wie folgt, und zwar ohne programmverändernde Maßnahmen, wie das Kopieren des zu überwachenden Speicherbereichs (Telegrammkopie 13), gelöst:

Soll in einem zu testenden Steuerungsprogramm zu jeder Zeit ein bestimmtes Datum in einem vorher nicht bekannten Speicherbereich überwacht werden, wird die Adresse eines Pointers, der den Speicherbereich in Form seiner Startadresse referenziert (also z. B. die Adresse des Telegrammpointers 12), zusammen mit der Position des zu überwachenden Datums 14 innerhalb des Speicherbereiches (Offset) in einem Debug-Register 18 eingetragen. Das Debug-Register 18 umfasst ein erstes Register 19, in dem zur Überwachung von Telegrammen 11 die Adresse des Telegrammpointers 12 im Speicher 10 eingetragen ist. Darüber hinaus umfasst das Debug-Register 18 ein zweites Register 20, in dem der Offset des zu überwachenden Datums 14, also,die Position des Datums 14 innerhalb des Telegramms 11, eingetragen ist.

Bei der Umsetzung des erfindungsgemäßen Verfahrens werden das Debug-Register 18 entweder software- oder hardwaremäßig ausgewertet. Bei einer softwaremäßigen Auswertung überwacht eine Debug-Software kontinuierlich die Debug-Register 18. Bei einer hardwaremäßigen Auswertung werden die Debug-Register 18 durch einen dafür vorgesehenen Prozessor oder den Hauptprozessor (CPU) des jeweiligen Gerätes, auf dem das zu überwachende Steuerungsprogramm ausgeführt wird, überwacht.

Aus den Informationen des Debug-Registers 18 leitet der Prozessor oder die Debug-Software einen ersten Watchpoint, der im Folgenden als Adresswatchpoint bezeichnet wird, ab und setzt folgende Funktionalität um:

Der Adresswatchpoint ist auf die Position, die durch das erste Register 19 referenziert wird, gerichtet. Es wird also ein Pointer (z. B. der Telegrammpointer 12) überwacht, der die Startadresse des zu überwachenden Speicherbereichs (z. B. die Startadresse des zu überwachenden Telegramms T2 11) referenziert. Der Adresswatchpoint wird mit einer vorgegebenen Triggerbedingung "Schreiben" überwacht. D. h., der Adresswatchpoint spricht dann an, wenn auf die durch das erste Register 19 referenzierte Adresse (den Telegrammpointer 12) schreibend zugegriffen wird. Dies ist dann der Fall, wenn steuerungsprogrammintern ein anderes Telegramm 11 zur Bearbeitung ausgewählt wird, z. B., weil ein neues Telegramm eintrifft oder ein neues Telegramm zum Versenden vorbereitet wird.

Eine mit dem Adresswatchpoint hardware- oder softwaremäßig verknüpfte Logik übernimmt nun die im Telegrammpointer 12 neu eingetragene Adresse plus dem vom Anwender definierten Offset, also dem Inhalt des zweiten Registers 20, als Adressparameter 16 in den Watchpointparameter 15. Die im Telegrammpointer 12 eingetragene Adresse ergibt sich dabei als Inhalt der Speicheradresse, die durch den Inhalt des ersten Registers 19 referenziert wird.

Aufgrund der Watchpointparameter 15 ergibt sich ein weiterer Watchpoint, der zur Unterscheidung vom Adresswatchpoint als Zielwatchpoint bezeichnet wird und der in seiner Funktionalität dem unter FIG 1 beschriebenen Watchpoint entspricht. Die Triggerbedingung für den Zielwatchpoint kann vom Anwender durch den Bedingungsparameter 17 vorgegeben werden, so dass sich die Funktionalität realisieren lässt, dass der Ablauf des zu überwachenden Steuerungsprogramms für weitergehende Untersuchungen dann unterbrochen wird, wenn in einem Telegramm 11 an einer vorgegebenen Position 14 ein bestimmter Wert, z. B. der Zahlenwert "100", auftritt.

Wenn durch das zu testende Steuerungsprogramm eine neue Adresse T-PTR in den Telegrammpointer 12 geschrieben wird, z. B. weil nun ein anderes Telegramm 11 zu bearbeiten ist, reagiert zunächst der Adresswatchpoint. Die zugehörige, in Hardware oder Software ausgeführte Logik, die z. B. als integrierte Schaltung im jeweiligen Prozessor abgelegt oder softwaremäßig als Bestandteil der Debug-Software realisiert ist, initialisiert den Zielwatchpoint, indem sie die Summe aus neu eingetragener Adresse im Telegrammpointer 12 und vom Anwender definiertem Offset als Adressparameter 16 übernimmt.

In dem Beispiel einer integrierten Schaltung in einem Prozessor reagiert diese Schaltung, ohne die Debug-Software zu "wecken", also quasi rückwirkungsfrei.

Wird gemäß der vom Anwender definierten Triggerbedingung die durch den Adressparameter 16 des Zielwatchpoints referenzierte Adresse, also das zu überwachende Datum 14, angesprochen, verhält sich der Prozessor oder die Debug-Software so, wie bei einem dem Stand der Technik entsprechenden Watchpoint.

Damit lässt sich die Erfindung kurz wie folgt darstellen:

Es wird ein Verfahren zum Überprüfen von Steuerungsprogrammen angegeben, das sich dadurch auszeichnet, dass auch Inhalte von Speicherbereichen zur Überprüfung zugänglich sind, die steuerungsprogrammintern durch indirekte Adressierung referenziert sind.

## Patentansprüche

1. Verfahren zur Überwachung eines Datums (14) in einem für ein Telegramm (11), d.h. ein strukturierter Datenaustausch zwischen zwei Rechner, vorgesehenen frei allokierten Speicherbereich, **dadurch gekennzeichnet, dass** ein die Startadresse des Speicherbereichs referenzierender Zeiger (12) überwacht wird und dass bei einem Zugriff auf den Zeiger (12) anhand dieses Zeigers ein Watchpoint abgeleitet und aktiviert wird, wobei
- das zu überwachende Datum (14) mittels des abgeleiteten Watchpoints überwacht wird,
- das zu überwachende Datum (14) durch seine relative Position im Telegramm (11) -Offset- spezifiziert wird,
- der Watchpoint zur Überwachung des Datums (14) durch Addition der durch den Inhalt des Zeigers (12) referenzierten Adresse und des Offsets abgeleitet wird, wobei die Adresse in einem ersten Register (19) und der Offset in einem zweiten Register (20) eines Debug-Registers (18) eingetragen ist.

2. Vorrichtung zur Überwachung eines Datums (14) in einem für ein Telegramm (11), d.h. ein strukturierter Datenaustausch zwischen zwei Rechner, vorgesehenen frei allokierten Speicherbereich, **gekennzeichnet durch** Mittel zur Überwachung eines eine Startadresse des Speicherbereichs referenzierenden Zeigers (12) und zur Ableitung und Aktivierung eines Watchpoints zur Überwachung des Datums (14) bei einem Zugriff auf den Zeiger (12), wobei
- das zu überwachende Datum (14) **durch** seine relative Position im Telegramm (11) -Offset- spezifiziert ist,
- bei einem Zugriff auf den Zeiger (12) anhand einer **durch** den Inhalt des Zeigers (12) referenzierten Adresse im Speicher (10) der Watchpoint **durch** Übernahme des Wertes des Zeigers (12) in ein erstes Register (19) eines Debug-Registers (18) abgeleitet wird und
- zur Ableitung des Watchpoints zur Überwachung des Datums (14) eine in Hard- oder Software ausgeführte Logik zur Addition der **durch** den Inhalt des Zeigers (12) referenzierten Adresse, welche im ersten Register (19) eingetragen ist, und des Offsets, welcher in einem zweiten Register (20) des Debug-Registers ((18) eingetragen ist, vorgesehen ist.

## Claims

1. Method for monitoring a data item (14) in a freely allocated storage region provided for a telegram (11), in other words a structured exchange of data between two computers or two processes on a computer, **characterized in that** a pointer (12) referring to the start address of the storage region is monitored and that upon access to the pointer (12), a watch point is derived and activated with the aid of this pointer, with
- the data item (14) to be monitored being monitored by means of the derived watch point
- the data item (14) to be monitored being specified by its relative position in the telegram (11) - offset -,
- the watch point for monitoring the data item (14) being derived by adding the address and the offset referred to by the contents of the pointer (12), with the address being entered in a first register (19) and the offset being entered in a second register (20) of a debug register (18).

2. Apparatus for monitoring a data item (14) in a freely allocated storage region provided for a telegram (11), in other words a structured exchange of data between two computers or two processes on one computer, **characterized by** means for monitoring a pointer (12) referring to a start address of the storage region and for deriving and activating a watch point in order to monitor the data item (14) upon access to the pointer (12), with
- the data item (14) to be monitored being specified by its relative position in the telegram (11) - offset -,
- the watch point being derived by assuming the value of the pointer (12) in a first register (19) of a debug register (18) upon access to the pointer (12) with the aid of an address in the memory (10) referred to by the content of the pointer (12),
- in order to derive the watch point for monitoring the data item (14), provision being made for a logic executed using hardware or software for adding the address referred to by the content of the pointer (12), said address being entered in the first register (19), and of the offset, which is entered in a second register (20) of the debug register (18).

## Revendications

1. Procédé de contrôle d'une donnée ( 14 ) dans une zone de mémoire affectée librement, prévue pour un télégramme ( 11 ), c'est-à-dire pour un échange de données structuré entre deux ordinateurs ou entre deux processus sur un ordinateur, **caractérisé en ce que** l'on contrôle un pointeur ( 12 ) référençant l'adresse de début de la zone de mémoire et **en ce que**, lorsqu'il y a un accès au pointeur ( 12 ), on déduit et on active un watchpoint au moyen de ce pointeur, dans lequel
- on contrôle la donnée ( 14 ) à contrôler au moyen du watchpoint déduit,
- on spécifie la donnée ( 14 ) à contrôler par sa position relative dans le télégramme ( 11 ) -offset-,
- on déduit le watchpoint pour le contrôle de la donnée ( 14 ) par addition de l'adresse référencée par le contenu du pointeur ( 12 ) et de l'offset, l'adresse étant enregistrée dans un premier registre ( 19 ) et l'offset dans un deuxième registre ( 20 ) d'un registre ( 18 ) de débogage.

2. Dispositif de contrôle d'une donnée ( 14 ) dans une zone de mémoire affectée librement, prévue pour un télégramme ( 11 ), c'est-à-dire un échange de données structuré entre deux ordinateurs ou entre deux processus sur un ordinateur, **caractérisé par** des moyens de contrôle d'un pointeur ( 12 ) référençant une adresse de début de la zone de mémoire et de déduction et d'activation d'un watchpoint pour le contrôle de la donnée ( 14 ) lorsqu'il se produit un accès au pointeur ( 12 ) dans lequel
- la donnée ( 14 ) à contrôler est spécifiée par sa position relative dans le télégramme ( 11 ) -offset-,
- s'il se produit un accès au pointeur ( 12 ) au moyen d'une adresse dans la mémoire ( 10 ) référencée par le contenu du pointeur ( 12 ), le watchpoint est déduit par prise en charge de la valeur du pointeur ( 12 ) dans un premier registre ( 19 ) d'un registre ( 18 ) de débogage et,
- pour la déduction du watchpoint pour le contrôle de la donnée ( 14 ), il est prévu une logique réalisée en matériel ou en logiciel pour l'addition de l'adresse référencée par le contenu du pointeur ( 12 ), qui est enregistrée dans le premier registre ( 19 ), et de l'offset qui est enregistré dans un deuxième registre ( 20 ) du registre ( 18 ) de débogage.
